# DEMANDE DE BREVET EUROPEEN

(11) **EP 4 613 528 A2**
(43) Date de publication de la demande: **10.09.2025**
(21) Numéro de dépôt: 25157636.9
(22) Date de dépôt: 13.02.2025
(51) Int. Cl.: B60K 11/08

(54) **CALANDRE DE RADIATEUR AVEC VOLETS MOBILES ET PROCÉDÉ DE MONTAGE CORRESPONDANT**

(30) Priorité: 15.02.2024 FR 2401492
(71) Demandeur: Renault s.a.s, 92100 Boulogne Billancourt (FR)
(72) Inventeur: DURON, Frédéric, 78280 GUYANCOURT (FR); FRILEUX, Stéphane, 78280 GUYANCOURT (FR); VERDERA, Damien, 78280 GUYANCOURT (FR)

(57) **Abrégé**

Calandre de radiateur (2) pour véhicule automobile comprenant un ensemble de volets actifs (3) susceptibles d'adopter une position ouverte et une position fermée.

La calandre (2) comprend un cadre fixe (4) et un cadre mobile, l'ensemble de volets (3) étant fixés à l'intérieur des cadres fixe (4) et mobile, les cadres fixe (4) et mobile étant reliés entre eux par un moyen d'assemblage du cadre fixe (4) et du cadre mobile, et un moyen de déplacement du cadre mobile entraînant l'ouverture et la fermeture des volets (3).

## Description

### Domaine technique

La présente invention concerne le domaine des calandres de radiateur pour véhicule automobile. En particulier, l'invention se rapporte à l'adaptation de la calandre à un design particulier.

Une calandre de radiateur pour véhicule automobile comprend avantageusement des volets actifs susceptibles d'adopter une position ouverte et une position fermée, permettant ainsi de contrôler la température du moteur. Lorsque le radiateur a besoin d'air frais pour le refroidissement du moteur, les volets actifs s'ouvrent.

Les volets actifs ont également une fonction esthétique puisqu'ils permettent de cacher les éléments techniques situés à l'arrière de la calandre. Pour des raisons aérodynamiques et esthétiques, la calandre de radiateur d'un véhicule peut comprendre un galbe. Le galbe engendre des complexités dans l'architecture de la calandre qui doit suivre la courbure souhaitée en répondant aux besoins techniques tels que la gestion de la température du moteur, et aux besoins esthétiques tels que l'animation et les formes créées lors de l'ouverture et de la fermeture de la calandre.

Une calandre de radiateur comprend par ailleurs au moins un cadre qui permet de maintenir les volets groupés.

### Techniques antérieures

Aujourd'hui, il existe des calandres plates comprenant deux volets plats capables de pivoter atour d'un axe transversal et orientés vers un côté du véhicule, pour contrôler l'entrée d'air dans le radiateur. Une conception comprenant deux volets plats n'est cependant pas une solution adaptée pour une calandre galbée puisque les volets ne peuvent pas suivre correctement la courbe de la calandre sans engendrer des soucis techniques et/ou esthétiques.

Il existe également des calandres comprenant des volets capables d'adopter une position ouverte puis fermée, mais de telles calandres comprennent des barreaux fixes visibles en surface de la calandre. Les barreaux fixes dans une calandre permettent généralement de répondre à des problématiques structurelles et/ou de sécurité. Pour des raisons esthétiques, cette solution n'est pas considérée comme optimale.

### Exposé de l'invention

La présente invention a pour but de proposer une solution qui réponde aux problématiques techniques et esthétiques précitées.

L'invention a donc pour objet une calandre de radiateur pour véhicule automobile comprenant un ensemble de volets actifs susceptibles d'adopter une position ouverte et une position fermée, un cadre fixe et un cadre mobile reliés entre eux par un moyen d'assemblage du cadre fixe et du cadre mobile, l'ensemble de volets étant fixés à l'intérieur des cadres fixe et mobile, et un moyen de déplacement du cadre mobile entraînant l'ouverture et la fermeture des volets.

Avantageusement, chaque volet comprend une plateforme étagée, au moins un moyen de fixation du volet au cadre fixe comprenant une liaison pivot, et au moins un moyen de fixation du volet au cadre mobile, comprenant un axe à angle droit et un ergot de maintien positionné à une extrémité de l'axe à angle droit.

Dans un mode de réalisation, le cadre mobile comprend un encadrement, au moins un barreau vertical ou horizontal traversant l'encadrement qui comprend plusieurs parties saillantes qui comprennent un trou oblong destiné à accueillir un moyen de fixation d'un volet au cadre mobile, et un moyen de déplacement du cadre mobile comprenant un moteur électrique et une biellette de commande, le moteur étant destiné à entraîner la biellette de commande.

Avantageusement, la biellette de commande du moyen de déplacement du cadre mobile est reliée à un barreau du cadre mobile permettant une translation du cadre mobile selon un axe vertical.

Le cadre fixe peut comprendre un encadrement, au moins un barreau vertical ou horizontal traversant l'encadrement qui comprend plusieurs parties saillantes qui comprennent un embout à clip, l'embout à clip étant destiné à accueillir le moyen de fixation du volet au cadre fixe.

Dans un mode de réalisation, le moyen d'assemblage du cadre fixe et du cadre mobile comprend une liaison à glissière.

Selon un mode de réalisation, l'ensemble de volets comprend plusieurs volets imbriqués ensemble et forme plusieurs colonnes et/ou plusieurs lignes de volets.

Avantageusement, la calandre comprend un galbe, les volets s'ouvrant horizontalement ou verticalement selon un axe normal au plan transversal passant par le barreau auquel les volets sont fixés.

L'invention a aussi pour objet un véhicule automobile qui comprend une calandre telle que définie ci-dessus.

L'invention a encore pour objet un procédé de montage d'une calandre de radiateur pour véhicule automobile telle que définie ci-dessus. Le procédé comprend les étapes suivantes :
- positionnement des volets sur une table de montage, chaque volet comprenant au moins un moyen de fixation du volet au cadre fixe, et au moins un moyen de fixation du volet au cadre mobile,
- fixation des volets au cadre mobile,
- rotation du cadre mobile afin que les volets soient verrouillés sur le cadre mobile,
- fixation du cadre fixe sur les volets par les moyens de fixation des volets au cadre fixe,
- assemblage du cadre fixe et du cadre mobile.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- La [Fig. 1] est une représentation schématique d'un véhicule automobile comprenant une calandre de radiateur selon un exemple de réalisation de l'invention ;
- La [Fig. 2A] est une vue en perspective de la face avant d'une calandre de radiateur pour véhicule automobile ;
- La [Fig. 2B] est une vue en perspective de la face arrière d'une calandre de radiateur pour véhicule automobile ;
- La [Fig. 3] est une vue en perspective d'un volet actif d'une calandre de radiateur pour véhicule automobile ;
- La [Fig. 4] est une représentation schématique de l'évolution spatiale du moyen de déplacement d'un cadre mobile et des volets actifs d'une calandre de radiateur au cours du temps ;
- La [Fig. 5] est une représentation schématique de l'étape de fixation des volets à un cadre mobile du procédé de montage d'une calandre de radiateur ;
- La [Fig. 6] est une représentation schématique de l'étape de rotation d'un cadre mobile du procédé de montage d'une calandre de radiateur ; et
- La [Fig. 7] est une représentation schématique de l'étape de fixation d'un cadre fixe sur les volets d'une calandre de radiateur du procédé de montage d'une calandre de radiateur.

### Description détaillée

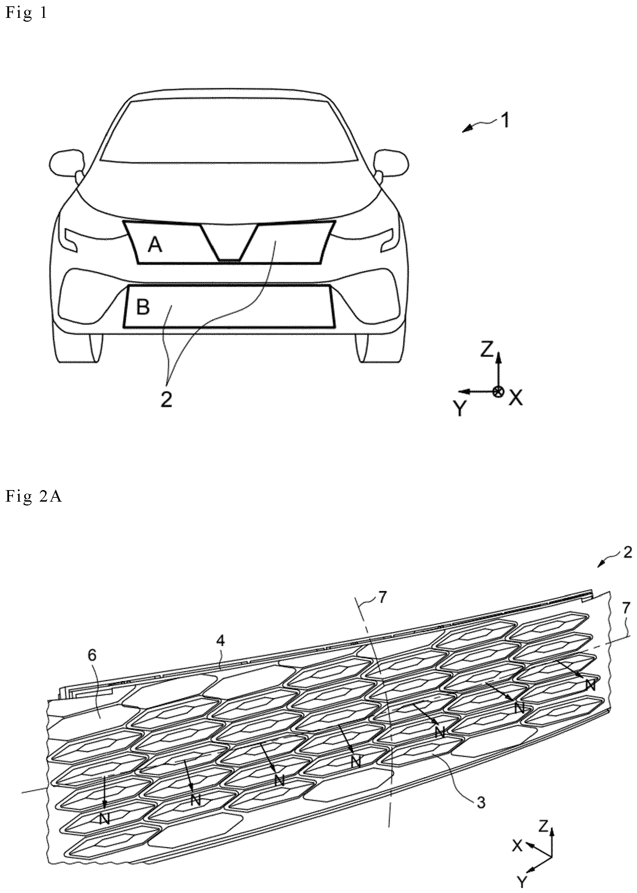

Sur la figure 1, on a représenté la face avant d'un véhicule automobile désigné par la référence numérique 1, comprenant une calandre de radiateur 2 basse A et une calandre de radiateur 2 haute B. Le véhicule automobile 1 s'inscrit dans un repère orthogonal X, Y, Z. L'axe X désigne la direction longitudinale avant-arrière du véhicule, l'axe Y désigne la direction transversale orientée vers la gauche du véhicule observé de face, selon la direction X, et l'axe Z désigne la direction verticale, orientée vers le haut du véhicule.

Le mode de réalisation décrit dans la suite de la description concerne la calandre 2 de radiateur basse B du véhicule automobile, mais peut tout à fait s'appliquer à toutes les calandres 2 de radiateur, en particulier à la calandre haute A du véhicule automobile.

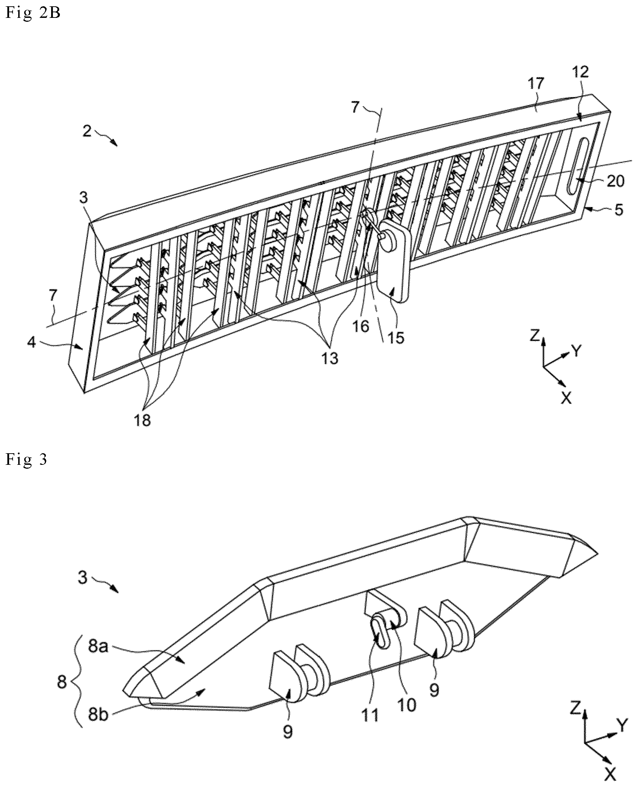

Les figures 2A et 2B représentent en perspective respectivement la face avant et la face arrière de la calandre 2. La calandre comprend un ensemble de volets actifs 3 capables d'adopter une position ouverte PO et une position fermée PF, un cadre fixe 4 et un cadre mobile 5, les deux cadres 4, 5 encadrant l'ensemble de volets 3. La calandre 2 comprend également un panneau fixe 6 fixé au cadre fixe 4, entourant les volets 3 et positionné selon un plan vertical.

La calandre 2 comprend un galbe 7 qui s'étend transversalement selon l'axe Y et verticalement selon l'axe Z. Par conséquent, les cadres fixe 4 et mobile 5 et le panneau fixe 6 comprennent une forme galbée conférant à la calandre une forme globalement convexe.

L'ensemble de volets actifs 3 comprends plusieurs volets 3 dont le nombre varie selon plusieurs paramètres, tels que les dimensions de la calandre 2, les caractéristiques d'aération souhaitées pour le moteur, et certaines normes en vigueur.

De préférence, l'ensemble de volets 3 comporte plusieurs lignes et/ou plusieurs colonnes de volets 3 alignés, formant ainsi une grille de motifs. Le panneau fixe 6 de la calandre 2 épouse exactement le contour de la grille de motifs créée. Par ailleurs, l'ensemble de volets 3 tend à suivre de manière précise la forme du galbe 7 de la calandre 2. Plus la calandre 2 comprend de volets 3, plus l'ensemble de volets 3 épouse la forme galbée 7 de la calandre 2.

La figure 3 illustre un volet 3 comprenant une plateforme 8 étagée à deux niveaux, comprenant un niveau supérieur 8a et un niveau inférieur 8b, deux moyens de fixation du volet 3 au cadre fixe 4 et un moyen de fixation du volet 3 au cadre mobile 5. Les volets 3 sont en forme d'hexagones irréguliers.

Le premier volet 3 s'emboîte dans le second volet 3 grâce à la superposition du niveau supérieur 8a de la plateforme 8 étagée du premier volet 3 avec le niveau inférieur 8b de la plateforme 8 du second volet 3. Le panneau fixe 6 comprend un rebord qui s'imbrique parfaitement à la forme des volets 3. L'imbrication des volets 3 entre eux et des volets 3 au panneau fixe 6, améliore l'aérodynamisme de la calandre 2 et apporte une meilleure étanchéité au moteur.

Les moyens de fixation du volet 3 au cadre fixe 4 comprennent une liaison pivot 9, conférant au volet 3 la liberté de se déplacer en rotation autour de l'axe transversal Y vis-à-vis du cadre fixe 4. Ce mouvement de rotation permet ainsi au volet 3 d'adopter une position ouverte PO et une position fermée PF. Le moyen de fixation du volet 3 au cadre mobile 5 comprend un axe à angle droit 10 qui émerge du centre du volet 3 et un ergot de maintien 11 positionné à une extrémité de l'axe à angle droit 10, apportant au volet 3 une fonction de verrouillage et de stabilité sur le cadre mobile 5 lorsque ledit moyen de fixation du volet 3 au cadre mobile 5 est correctement activé.

Le volet 3 peut comprendre un moyen de fixation du volet 3 au cadre fixe 4 et plusieurs moyens de fixation du volet 3 au cadre mobile 5. Une conception de volet 3 comprenant deux moyens de fixation du volet 3 au cadre fixe 4 permet une position stable du volet 3 qui doit être capable de résister aux conditions météorologiques durant le roulage du véhicule automobile 1.

Chaque volet 3 est fixé à l'intérieur des cadres fixe 4 et mobile 5. Plus précisément, les volets 3 sont fixés d'une part sur le cadre fixe 4 par l'intermédiaire des moyens de fixation du volet 3 au cadre fixe 5, et les volets 3 sont fixés d'autre part sur le cadre mobile 5 par l'intermédiaire du moyen de fixation du volet 3 au cadre mobile 5.

La calandre 2 représentée sur les figures 2A et 2B comprend sept colonnes de volets 3 alignées les unes à côté des autres et imbriquées avec un léger décalage vertical, chaque colonne comprenant cinq volets 3.

Le cadre mobile 5 comprend un encadrement 12, sept barreaux 13 verticaux qui traversent l'encadrement 12 du cadre mobile 5 et qui comprennent chacun cinq parties saillantes. Chaque partie saillante comprend un trou oblong 14 destiné à accueillir le moyen de fixation d'un volet 3 au cadre mobile 5. Plus précisément, le trou oblong 14 est destiné à accueillir l'axe à angle droit 10 et l'ergot de maintien 11 d'un volet 3. Le cadre mobile 5 comprend également un moyen de déplacement du cadre mobile 5 selon l'axe vertical Z.

Le moyen de déplacement comprend par exemple un moteur électrique 15 et une biellette 16 de commande positionnée longitudinalement entre le moteur 15 et le barreau 13 central du cadre mobile 5. Le moteur 15 permet de déplacer la biellette 16 de commande selon l'axe vertical Z, celle-ci entraînant la translation du cadre mobile 5.

Le cadre fixe 4 de la calandre 2 comprend un encadrement 17, quatorze barreaux 18 verticaux qui traversent l'encadrement 17 du cadre fixe 4 et qui comprennent chacun cinq parties saillantes. Chaque partie saillante comprend à son extrémité un embout à clip 19 destiné à accueillir le moyen de fixation d'un volet 3 au cadre fixe 4. Plus précisément, l'embout à clip 19 est destiné à être clipsé sur la liaison pivot 9 d'un volet 3.

Les cadres fixe 4 et mobile 5 sont reliés entre eux par un moyen d'assemblage du cadre fixe 4 et du cadre mobile 5. Le moyen d'assemblage comprend une liaison à glissière 20 de manière à permettre au cadre mobile 5 une translation verticale selon l'axe Z tandis que le cadre fixe 4 reste fixe dans la calandre 2. La longueur de la liaison à glissière 20 est comprise entre 5 millimètres et 50 millimètres, de préférence égale à 20 millimètres.

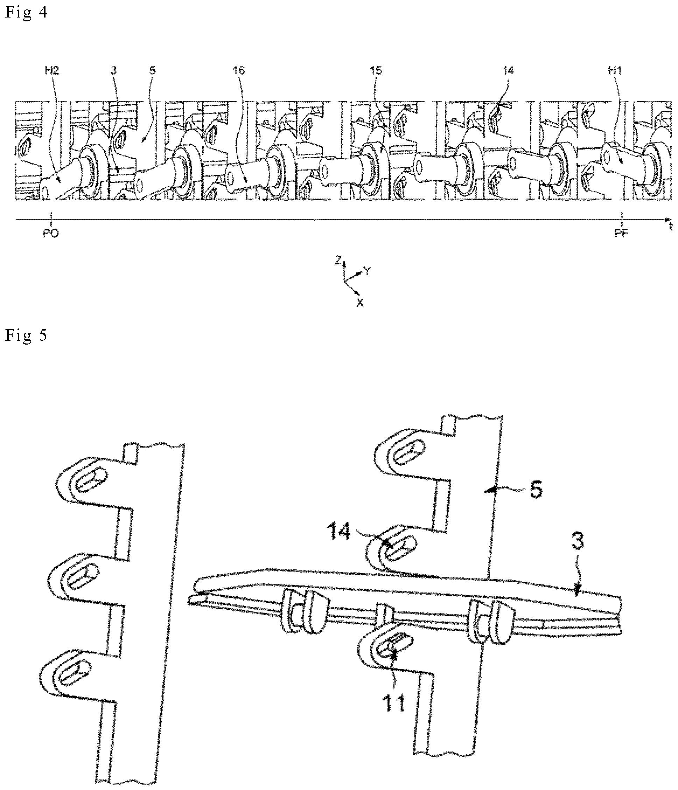

Lorsque le cadre mobile 5 se déplace verticalement selon l'axe Z, les volets 3 adoptent une position fermée PF ou une position ouverte PO selon la hauteur de la biellette 16. La figure 4 illustre le mouvement de la biellette 16 entraînant l'ouverture et la fermeture des volets 3 au cours du temps t.

Lorsque les volets 3 sont en position ouverte PO, la biellette 16 est à une hauteur H1 inférieure à sa hauteur H2 lorsque les volets 3 sont en position fermée PF. Les liaisons pivots 9 des volets 3 maintiennent les volets 3 fixés au cadre fixe 4, tout en leur permettant une rotation autour de l'axe Y, et les moyens de fixation des volets 3 au cadre mobile 5 permettent aux volets 3 de suivre la translation du cadre mobile 5. Par conséquent, lorsque le cadre mobile 5 et la biellette 16 sont à une hauteur H2, les volets 3 sont fermés, et lorsque le cadre mobile 5 et la biellette 16 sont à une hauteur H1, les volets 3 sont ouverts, effectuant une rotation de 90° d'une position à l'autre.

Sans solution adaptée, les volets 3 s'ouvrent et se ferment selon un axe normal au plan transversal passant par le barreau sur lequel agit la biellette 16. La forme créée lorsque les volets 3 sont ouverts selon un axe normal au plan transversal passant par le barreau central du cadre mobile 5, est un arc de cercle concave vers le bas, ce qui n'est pas attractif esthétiquement.

L'ouverture des volets 3 est donc effectuée selon un axe normal N au plan transversal qui passe par le barreau auquel les volets 3 correspondants sont fixés, afin que lesdits volets 3 s'ouvrent de manière horizontale, indépendamment de leur position sur le galbe 7 de la calandre 2. En d'autres termes, le volet 3 fixé au barreau central s'ouvre selon un axe normal au plan transversal passant par le barreau central du cadre mobile 5, tandis qu'un volet 3 fixé au barreau le plus à gauche s'ouvre selon un axe normal au plan transversal passant par le barreau le plus à gauche du cadre mobile 5.

Ce mécanisme est permis grâce aux trous oblongs 14 des barreaux 13 du cadre mobile 5. En effet, les trous oblongs 14 apportent une liberté de déplacement lors du changement de position des volets 3, permettant un alignement horizontal de chaque volet 3.

Cette solution est adaptée à de nombreuses formes et orientations possibles de la calandre 2. Il est ainsi possible de concevoir une calandre 2 comportant des cadres fixe 4 et mobile 5 qui comprennent des barreaux horizontaux traversant l'encadrement des cadres, et comportant un moyen de fixation du volet 3 au cadre mobile 5 tourné à 90°, entraînant la translation du cadre mobile 5 selon l'axe Y et la rotation des volets 3 autour de l'axe Z. On peut également envisager cette solution pour n'importe quel type et forme de volet.

Par ailleurs, une longueur différenciée des parties saillantes des cadres fixe 4 et mobile 5 permet de traiter une calandre 2 comprenant un galbe 7 concave, convexe ou plat, et d'obtenir des vitesses d'ouverture et de fermeture des volets 3 différenciées. Cela permet d'avoir un effet animé d'ondulation lors de l'ouverture et de la fermeture des volets 3. On peut par exemple envisager lors du démarrage du véhicule automobile 1, qu'une ouverture et fermeture des volets 3 particulière soit effectuée, de manière à ce que la calandre 2, considérée comme étant la « bouche » du véhicule automobile 1, s'anime d'une manière accueillante.

Les figures 5, 6 et 7 illustrent certaines étapes du procédé de montage de la calandre 2 telle que décrite ci-dessus.

Le procédé de montage de la calandre 2 comprend une première étape de positionnement des volets 3 sur une table de montage. Les volets 3 sont positionnés de manière à rendre accessibles les moyens de fixation des volets 3 au cadre fixe 4 et au cadre mobile 5.

La deuxième étape du procédé de montage de la calandre 2 est illustrée sur la figure 5 et correspond à l'activation des moyens de fixation des volets 3 au cadre mobile 5. Le cadre mobile 5 est positionné par-dessus les volets 3 pour permettre aux axes à angles droits 10 des moyens de fixation des volets 3 au cadre mobile 5 d'être logés dans les trous oblongs 14 des parties saillantes du cadre mobile 5.

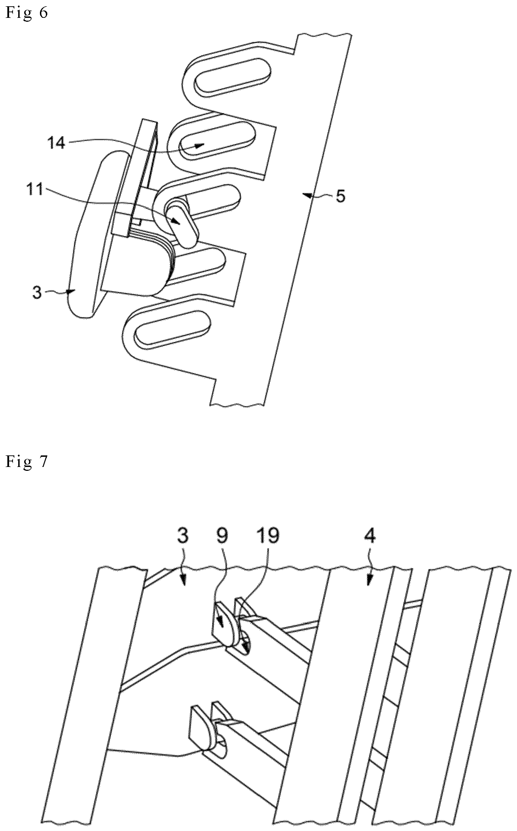

La troisième étape du procédé de montage de la calandre 2 illustrée sur la figure 6 correspond à la rotation du cadre mobile 5 pour activer le verrouillage des moyens de fixation des volets 3 sur le cadre mobile 5, et donc le verrouillage des volets 3 sur le cadre mobile 5. En d'autres termes, la rotation du cadre mobile 5 entraîne la fermeture de l'axe à angle droit 10 dans le trou oblong 14 du cadre mobile 5, l'ergot de maintien 11 étant ainsi positionné perpendiculairement au trou oblong 14.

Ensuite, le procédé comprend une quatrième étape illustrée sur la figure 7 qui correspond à la fixation du cadre fixe 4 sur les volets 3 par les moyens de fixation des volets 3 au cadre fixe 4. Plus précisément, les embouts à clip 19 du cadre fixe 4 sont clipsés aux liaisons pivots 9 des volets 3.

Pour finir, le procédé de montage de la calandre 2 comprend une cinquième étape consistant en l'assemblage du cadre fixe 4 et du cadre mobile 5 par l'intermédiaire du moyen d'assemblage des deux cadres 4, 5. La liaison à glissière 20 est activée, laissant la liberté au cadre mobile 5 de se déplacer verticalement selon l'axe Z.

Cette solution permet ainsi d'adapter le mouvement des volets en fonction de l'architecture de la calandre et des conditions techniques voulues, tout en respectant une esthétique particulière.

## Revendications

1. Calandre de radiateur (2) pour véhicule automobile (1) comprenant un ensemble de volets actifs (3) susceptibles d'adopter une position ouverte (PO) et une position fermée (PF), **caractérisée en ce qu'**elle comprend un cadre fixe (4) et un cadre mobile (5) reliés entre eux par un moyen d'assemblage du cadre fixe (4) et du cadre mobile (5), l'ensemble de volets (3) étant fixés à l'intérieur des cadres fixe (4) et mobile (5), et un moyen de déplacement du cadre mobile (5) entraînant l'ouverture et la fermeture des volets (3).

2. Calandre (2) selon la revendication 1, dans laquelle chaque volet (3) comprend une plateforme (8) étagée, au moins un moyen de fixation du volet (3) au cadre fixe (4) comprenant une liaison pivot (9), et au moins un moyen de fixation du volet (3) au cadre mobile (5), comprenant un axe à angle droit (10) et un ergot de maintien (11) positionné à une extrémité de l'axe à angle droit (10).

3. Calandre (2) selon l'une des revendications 1 et 2, dans laquelle le cadre mobile (5) comprend un encadrement (12), au moins un barreau (13) vertical ou horizontal traversant l'encadrement (12) qui comprend plusieurs parties saillantes qui comprennent un trou oblong (14) destiné à accueillir un moyen de fixation d'un volet (3) au cadre mobile (5), et un moyen de déplacement du cadre mobile (5) comprenant un moteur électrique (15) et une biellette de commande (16), le moteur (15) étant destiné à entraîner la biellette (16) de commande.

4. Calandre (2) selon la revendication 3, dans laquelle la biellette (16) de commande du moyen de déplacement du cadre mobile (5), est reliée à un barreau (13) du cadre mobile (5) permettant une translation du cadre mobile (5) selon un axe vertical (Z).

5. Calandre (2) selon l'une des revendications 3 et 4, qui comprend un galbe (7), les volets (3) s'ouvrant horizontalement ou verticalement selon un axe normal (N) au plan transversal passant par le barreau (13) auquel les volets (3) sont fixés.

6. Calandre (2) selon l'une quelconque des revendications 1 à 5, dans laquelle le cadre fixe (4) comprend un encadrement (17), au moins un barreau (18) vertical ou horizontal traversant l'encadrement (17) qui comprend plusieurs parties saillantes qui comprennent un embout à clip (19), l'embout à clip (19) étant destiné à accueillir le moyen de fixation du volet (3) au cadre fixe (4).

7. Calandre (2) selon l'une quelconque des revendications 1 à 6, dans laquelle le moyen d'assemblage du cadre fixe (4) et du cadre mobile (5) comprend une liaison à glissière (20).

8. Calandre (2) selon l'une quelconque des revendications 1 à 7, dans laquelle l'ensemble de volets (3) comprend plusieurs volets (3) imbriqués ensemble et forme plusieurs colonnes et/ou plusieurs lignes de volets (3).

9. Véhicule automobile (1) qui comprend une calandre (2) selon l'une quelconque des revendications 1 à 8.

10. Procédé de montage d'une calandre (2) de radiateur pour véhicule automobile (1) selon l'une quelconque des revendications 1 à 8, **caractérisé en ce qu'**il comprend les étapes suivantes :
- positionnement des volets (3) sur une table de montage, chaque volet (3) comprenant au moins un moyen de fixation du volet (3) au cadre fixe (4), et au moins un moyen de fixation du volet (3) au cadre mobile (5),
- fixation des volets (3) au cadre mobile (5),
- rotation du cadre mobile (5) afin que les volets (3) soient verrouillés sur le cadre mobile (5),
- fixation du cadre fixe (4) sur les volets (3) par les moyens de fixation des volets (3) au cadre fixe (4),
- assemblage du cadre fixe (4) et du cadre mobile (5).
